# EUROPÄISCHE PATENTANMELDUNG

(11) **EP 0 999 405 A2**
(43) Veröffentlichungstag der Anmeldung: **10.05.2000**
(21) Anmeldenummer: 99118928.3
(22) Anmeldetag: 25.09.1999
(51) Int. Cl.: F21S 8/10, B60Q 1/26

(54) **Signalleuchte, insbesondere Heckleuchte, von Fahrzeugen, vorzugsweise Kraftfahrzeugen**

(30) Priorität: 06.11.1998 DE 19851174
(71) Anmelder: REITTER & SCHEFENACKER GmbH & Co. KG, D-73730 Esslingen (DE)
(72) Erfinder: Zwick, Hubert, 70173 Stuttgart (DE); Müller, Otto, 73347 Mühlhausen (DE); Bauder, Rudolf, 75394 Oberreichenbach (DE)
(74) Vertreter: Kohl, Karl-Heinz

(57) **Zusammenfassung**

Die Signalleuchte hat eine Leuchtenkammer (20), in der sich ein einer Signalfunktion zugeordnetes Leuchtmittel (3, 4) befindet, dessen Strahlen von einem Reflektor (7, 14) zu einem die Leuchtenkammer (20) abschließenden Lichtfenster (2) reflektierbar sind. Um die Signalleuchte so auszubilden, daß sie für unterschiedlichste Signalfunktionen eingesetzt werden kann, ist in der Leuchtenkammer (20) ein weiteres, einer zweiten Signalfunktion zugeordnetes Leuchtmittel (3, 4) untergebracht, dem ein zweiter Reflektor (7, 14) zugeordnet ist. Er lenkt die Strahlen des zweiten Leuchtmittels (3, 4) unter einem anderen horizontalen Winkel ab als der erste Reflektor (14, 7). Dadurch wird erreicht, daß in einer einzigen Leuchtenkammer (20) Leuchtmittel (3, 4) untergebracht werden können, die unterschiedliche Funktionen haben.

## Beschreibung

Die Erfindung betrifft eine Signalleuchte, insbesondere eine Heckleuchte, von Fahrzeugen, vorzugsweise von Kraftfahrzeugen, nach dem Oberbegriff des Anspruches 1.

Bei einer solchen bekannten Signalleuchte (DE 195 14 424 A1) ist das Leuchtengehäuse so ausgebildet, daß wahlweise das eine oder andere Leuchtmittel untergebracht werden kann. Für beide Leuchtmittel ist eine Linse vorgesehen, die so ausgebildet ist, daß je nach Leuchtmittel das erforderliche Lichtverteilungsmuster gebildet werden kann. Sollen beide Leuchtmittel gleichzeitig eingesetzt werden, sind zwei Signalleuchten mit einer solchen Ausbildung erforderlich.

Der Erfindung liegt die Aufgabe zugrunde, die gattungsgemäße Signalleuchte so auszubilden, daß sie für unterschiedlichste Signalfunktionen eingesetzt werden kann.

Diese Aufgabe wird bei der gattungsgemäßen Signalleuchte erfindungsgemäß mit den kennzeichnenden Merkmalen des Anspruches 1 gelöst.

Bei der erfindungsgemäßen Signalleuchte sind in der Leuchtenkammer zwei Leuchtmittel gleichzeitig untergebracht, die unterschiedliche Signalfunktionen erfüllen. Jedem Leuchtmittel ist ein Reflektor zugeordnet. Diese Reflektoren sind so ausgebildet, daß sie die von den unterschiedlichen Leuchtmitteln kommenden Strahlen unter unterschiedlichen horizontalen Winkeln reflektieren. Dadurch wird erreicht, daß in einer einzigen Leuchtenkammer Leuchtmittel untergebracht werden können, die unterschiedliche Funktionen haben. So kann das eine Leuchtmittel beispielsweise als Rückfahrlicht und das andere Leuchtmittel beispielsweise als Nebelschlußleuchte eingesetzt werden. Für diese unterschiedlichen Signalfunktionen sind somit nicht unterschiedliche Signalleuchten notwendig.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: im Querschnitt eine erfindungsgemäße Signalleuchte,
- Fig. 2: in perspektivischer Darstellung einen Teil der erfindungsgemäßen Signalleuchte gemäß Fig. 1.

Im dargestellten Ausführungsbeispiel ist die Signalleuchte eine Heckleuchte eines Fahrzeuges, insbesondere eines Kraftfahrzeuges. Sie hat ein Leuchtengehäuse 1, das durch ein Lichtfenster 2 geschlossen ist, durch das das von Leuchtmitteln 3, 4 ausgesandte Licht aus dem Leuchtengehäuse 1 nach außen tritt. Im Leuchtengehäuse 1 sind unterschiedliche Leuchtmittel zur Erfüllung unterschiedlicher Signalfunktionen untergebracht. Im dargestellten Ausführungsbeispiel ist das Leuchtmittel 4 eine farblose Glühlampe, die die Funktion der Rückfahrleuchte erfüllt. Die Leuchtmittel 3 sind vorteilhaft LEDs, die die Funktion einer Nebelschlußleuchte haben und rotes Licht abstrahlen. Das Lichtfenster 2 selbst ist einfarbig bzw. farblos ausgebildet, so daß die entsprechende Signalfarbe durch die Farbe des jeweiligen Leuchtmittels 3, 4 erzielt wird.

Der Gesetzgeber schreibt vor, daß die unterschiedlichen Leuchtmittel bestimmte Strahlwinkel in horizontaler und vertikaler Richtung einhalten müssen. So wird für die Nebelschlußleuchte ein horizontaler Streuwinkel von 10° und für die Rückfahrleuchte ein horizontaler Streuwinkel von 45° vorgeschrieben. Durch den kleinen Streuwinkel der Nebelschlußleuchte wird somit erreicht, daß sie intensiv in Fahrtrichtung nach hinten abstrahlt und vom nachfolgenden Verkehr zuverlässig erkannt wird. Der größere horizontale Streuwinkel der Rückfahrleuchte ist erforderlich, um beim Rückwärtsfahren einen ausreichend breiten Bereich hinter dem Fahrzeug auszuleuchten, um Kollisionen mit Hindernissen beim Rückwärtsfahren in der Dunkelheit zu vermeiden. Außerdem müssen die einzelnen Signalleuchten auch in vertikaler Richtung einen Streuwinkel aufweisen, der für eine Nebelschlußleuchte und eine Rückfahrleuchte identisch ist.

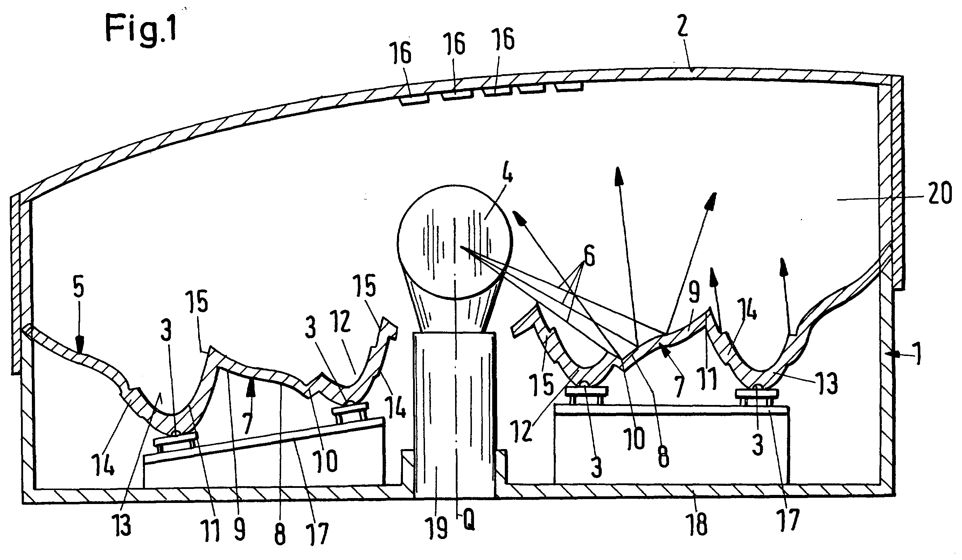

Da die Nebelschlußleuchte 3 und die Rückfahrleuchte 4 unterschiedliche horizontale Streuwinkel aufweisen, sind zur Erzeugung der Horizontalstreuung für diese beiden unterschiedlichen Leuchtmittel 3, 4 gesonderte Bereiche in einem Reflektor 5 vorgesehen. Wie Fig. 1 für die Glühlampe 4 zeigt, treffen die von ihr ausgehenden Lichtstrahlen 6 auf eine Reflektorfläche 7, an der die Lichtstrahlen zum Lichtfenster 2 reflektiert werden. Die Reflektorfläche 7 ist so ausgebildet, daß mindestens der horizontale Streuwinkel von 45° erreicht wird. Der Reflektor 5 weist beiderseits der Glühlampe 4 jeweils eine solche Reflektorfläche 7 auf, die, bezogen auf eine durch den Mittelpunkt der Glühlampe 4 gehende Quermittelebene Q, spiegelsymmetrisch zueinander liegen. Im Längsschnitt ist die Reflektorfläche 7 S-förmig ausgebildet. Der der Glühlampe 4 benachbart liegende Flächenteil 8 ist konvex gekrümmt, während der entfernt zur Glühlampe 4 liegende Flächenteil 9 konvexe Form hat. Die Flächenteile 8, 9 erstrecken sich in der Einbaulage der Signalleuchte vertikal. Wie Fig. 1 zeigt, liegen die beiden Reflektorflächen 7 unter einem spitzen Winkel zu der durch den Mittelpunkt der Glühlampe 4 gehenden Quermittelebene Q, so daß die Reflektorflächen 7 am glühlampennahen Bereich 8 größeren Abstand vom Lichtfenster 2 haben als im glühlampenabgewandten Flächenteil 9.

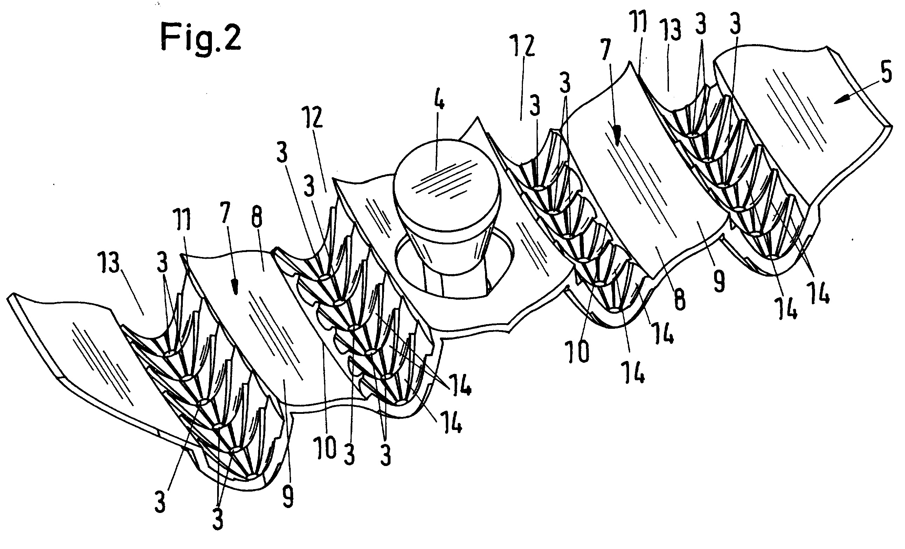

Die beiden Reflektorflächen 7 schließen mit beiden Längsrändern 10, 11 an rinnenförmige Abschnitte 12, 13 an, die sich über die Breite des Reflektors 5 erstrecken und in denen mit Abstand hintereinander die LEDs 3 vorgesehen sind. Jeder LED 3 ist ein Reflektor 14 zugeordnet, der so ausgebildet ist, daß er die von den LEDs kommenden Strahlen in einem horizontalen Streuwinkel von 10° in Richtung auf das Lichtfenster 2 lenkt. Die Reflektoren 14 sind in den rinnenförmigen Abschnitten 12, 13 vorgesehen. Vorteilhaft sind die Reflektoren 14 einstückig mit dem Reflektor 5 ausgebildet, insbesondere durch besonders gestaltete Bereiche des Reflektors 5 gebildet. Die Reflektoren 14 liegen in bezug auf die Reflektoren 7 in den rinnenförmigen Abschnitten 12, 13 vertieft. Die LEDs 3 liegen, wie die Fig. 1 und 2 zeigen, an der tiefsten Stelle der Reflektoren 14.

Die rinnenförmigen Abschnitte 12, 13 haben eine der Glühlampe 4 zugewandte Seitenwand 15, die so weit hochgezogen ist, daß die von der Glühlampe 4 ausgesandten Strahlen nicht in die rinnenförmigen Abschnitte 12, 13 und damit auf die Reflektoren 14 fallen können. In Fig. 1 ist in der rechten Hälfte der Strahlenverlauf bezüglich der Glühlampe 4 dargestellt. Daraus ist ersichtlich, daß die Strahlen nicht auf die Reflektoren 14 treffen. Dadurch wird verhindert, daß die Strahlen der LEDs 3 und der Glühlampe 4 von denselben Reflektoren zum Lichtfenster 2 reflektiert werden. Da die Reflektorflächen 7 am glühlampenseitigen Rand größeren Abstand vom Lichtfenster 2 haben als an ihrem von der Glühlampe abgewandten Rand, gelangen die von der Glühlampe 4 ausgesandten Strahlen nicht in die rinnenförmigen Abschnitte 13 und an die in ihnen liegenden Reflektoren 14.

Das Lichtfenster 2 ist an seiner Innenseite mit horizontalen Zylinderlinsen 16 versehen, mit denen die vom Reflektor 5 reflektierten Strahlen in Vertikalrichtung gestreut werden. Für die Nebelschlußleuchte in Form der LEDs 3 und für das Rückfahrlicht in Form der farblosen Glühlampe 4 wird der gleiche vertikale Streuwinkel vorgeschrieben, so daß für beide Leuchtmittel dieselben Zylinderlinsen 16 herangezogen werden können. Mit den Reflektorflächen 7, 14 wird lediglich eine Streuung der Strahlen in Horizontalrichtung erreicht. Die Zylinderlinsen 16 verhindern den uneingeschränkten Einblick von außen in die Heckleuchte. Aufgrund der beschriebenen Ausbildung des Reflektors 5 und der beschriebenen Anordnung der Leuchtmittel 3, 4 wird eine gegenseitige Abschattung der Reflektorbereiche 7 und 14 für das Rückfahrlicht 4 und das Nebelschlußlicht 3 verhindert. Der Abstand des Reflektors 5 vom Lichtfenster 2 sowie die Horizontalstreuung am Reflektor 5 sind so aufeinander abgestimmt, daß wenigstens 60 % der Fläche des Lichtfensters 2 beim Einsatz der jeweiligen Signalleuchte 3, 4 beleuchtet werden.

Die LEDs 3 sind vorteilhaft auf einer einzigen ebenen Platine 17 vorgesehen. Da zu beiden Seiten der Glühlampe 4 LEDs 3 vorgesehen sind, sind auch zu beiden Seiten der Glühlampe 4 zwei Platinen 17 für die LEDs 3 vorgesehen. Die in Fig. 1 rechte Platine 17 liegt parallel zum Boden 18 des Leuchtengehäuses 1. Die in Fig. 1 linke Platine 17 liegt unter einem spitzen Winkel zum Boden 18 des Leuchtengehäuses 1. Von einem Lampensockel 19 für die Glühlampe 4 aus ist die in Fig. 1 linke Platine 17 schräg gegen den Boden 18 gerichtet. Da die beiderseits der Glühlampe 4 vorgesehenen LEDs jeweils in einer Ebene liegen, können die ebenen Platinen 17 verwendet werden, die einfach und vor allen Dingen kostengünstig hergestellt und ohne Probleme im Leuchtengehäuse 1 montiert werden können.

Da das Lichtfenster 2 an seinem in Fig. 1 rechten Rand größeren Abstand vom Boden 18 des Leuchtengehäuses 1 hat als an seinem linken Rand, ist der Reflektor 5 entsprechend schräg eingebaut. Sein in Fig. 1 rechter Rand hat dementsprechend größeren Abstand vom Boden 18 als sein in Fig. 1 linker Rand.

Im beschriebenen Leuchtengehäuse 1 sind in einer einzigen Leuchtenkammer 20 die Leuchtmittel 3, 4 für unterschiedliche Signalfunktionen untergebracht. Aufgrund der beschriebenen Ausbildung des Reflektors 5 können beide Leuchtmittel 3, 4 gleichzeitig im Einsatz sein, ohne daß es zu einer Beeinträchtigung der Signalfunktion der entsprechenden Leuchtmittel 3, 4 kommt. Das Lichtfenster 2 ist einfarbig ausgebildet, während die Leuchtmittel 3, 4 entsprechend ihrer auszuübenden Signalfunktion eingefärbt sind.

Im dargestellten und beschriebenen Ausführungsbeispiel ist die Glühlampe 4 farblos, während die LEDs 3 rot eingefärbt sind. In gleicher Weise können in der Leuchtenkammer 20 auch Leuchtmittel für andere Signalfunktionen eingesetzt werden, so für das Bremslicht oder das Blinklicht.

## Patentansprüche

1. Signalleuchte, insbesondere Heckleuchte, von Fahrzeugen, vorzugsweise Kraftfahrzeugen, mit einer Leuchtenkammer, in der sich mindestens ein einer Signalfunktion zugeordnetes Leuchtmittel befindet, dessen Strahlen von einem Reflektor zu einem die Leuchtenkammer abschließenden Lichtfenster reflektierbar sind,
dadurch gekennzeichnet, daß in der Leuchtenkammer (20) wenigstens ein weiteres, einer zweiten Signalfunktion zugeordnetes Leuchtmittel (3, 4) untergebracht ist, dem ein zweiter Reflektor (7, 14) zugeordnet ist, der die Strahlen des zweiten Leuchtmittels (3, 4) unter einem anderen horizontalen Winkel ablenkt als der erste Reflektor (14, 7).

2. Signalleuchte nach Anspruch 1,
dadurch gekennzeichnet, daß die Reflektoren (7, 14) so angeordnet sind, daß sie nur die Strahlen der ihnen zugeordneten Leuchtmittel (3, 4) reflektieren.

3. Signalleuchte nach Anspruch 1 oder 2,
dadurch gekennzeichnet, daß die beiden Reflektoren (7, 14) Bestandteil eines gemeinsamen Reflektorteiles (5) sind, das vorteilhaft mindestens eine Vertiefung (12, 13) aufweist, in der der eine Reflektor (14) angeordnet ist.

4. Signalleuchte nach Anspruch 3,
dadurch gekennzeichnet, daß das eine Leuchtmittel (3) im Bereich des Bodens der Vertiefung (12, 13) vorgesehen ist, in der vorzugsweise in ihrer Längsrichtung mehrere Reflektoren (14) hintereinander angeordnet sind, denen jeweils ein Leuchtmittel (3) zugeordnet ist,

5. Signalleuchte nach Anspruch 3 oder 4,
dadurch gekennzeichnet, daß das Leuchtmittel (3) eine LED ist.

6. Signalleuchte nach einem der Ansprüche 1 bis 5,
dadurch gekennzeichnet, daß das eine, vorzugsweise rotes Licht abstrahlende Leuchtmittel (3) als Nebelschlußleuchte dient.

7. Signalleuchte nach einem der Ansprüche 1 bis 6,
dadurch gekennzeichnet, daß das andere, vorzugsweise farblose Leuchtmittel (4) eine Glühlampe ist, die vorteilhaft als Rückfahrlicht dient.

8. Signalleuchte nach Anspruch 7,
dadurch gekennzeichnet, daß der der Glühlampe (4) zugeordnete Reflektor (7) im Querschnitt S-förmig gekrümmt verläuft und daß der der Glühlampe (4) benachbarte Reflektorflächenteil (8) vorzugsweise konvex gekrümmt und der von der Glühlampe (4) entfernte Flächenteil (9) des Reflektors (7) vorzugsweise konkav gekrümmt verläuft.

9. Signalleuchte nach einem der Ansprüche 1 bis 8,
dadurch gekennzeichnet, daß beiderseits des einen Leuchtmittels (4) je ein ihm zugeordneter Reflektor (7) und/oder mindestens je eine, vorzugsweise zwei Vertiefungen (12, 13) vorgesehen sind, zwischen denen vorteilhaft jeweils ein Reflektor (7) des anderen Leuchtmittels (4) liegt.

10. Signalleuchte nach Anspruch 9,
dadurch gekennzeichnet, daß die dem einen Leuchtmittel (4) benachbarte Seitenwand (15) der diesem Leuchtmittel (4) benachbarten Vertiefung (12) so hochgezogen ist, daß die von diesem Leuchtmittel (4) ausgehenden Strahlen ausschließlich auf den außerhalb der Vertiefung (12, 13) liegenden Reflektor (7) fallen.

11. Signalleuchte nach einem der Ansprüche 4 bis 10,
dadurch gekennzeichnet, daß die in der Vertiefung (12, 13) angeordneten Leuchtmittel (3) in einer Ebene, vorteilhaft auf einer ebenen Platine (17), liegen.

12. Signalleuchte nach einem der Ansprüche 1 bis 11,
dadurch gekennzeichnet, daß das vorzugsweise einfarbige Lichtfenster (2) innenseitig Zylinderlinsen (16) zur Vertikalstreuung der Strahlen der Leuchtmittel (3, 4) aufweist.
